# FASCICULE DE BREVET EUROPEEN

(11) **EP 1 580 873 B1**
(45) Date de publication et mention de la délivrance du brevet: **03.09.2008**
(21) Numéro de dépôt: 05354005.0
(22) Date de dépôt: 14.01.2005
(51) Int. Cl.: H02M 1/08, H02M 7/5387

(54) **Dispositif et procédé de commande d'un convertisseur et convertisseur et installation électrique comportant un tel dispositif**
Vorrichtung und Verfahren zur Steuerung eines Umwandlers und Umwandler und eine solche Vorrichtung enthaltende Elektroinstallation
Apparatus and method for control of a converter and converter and electrical installation comprising such an apparatus

(30) Priorité: 22.03.2004 FR 0402921
(43) Date de publication de la demande: 28.09.2005
(73) Titulaire: SCHNEIDER ELECTRIC INDUSTRIES SAS, 92500 Rueil-Malmaison (FR)
(72) Inventeur: Baudesson, Philippe, 38050 Grenoble Cédex 09 (FR); Bouvet, Francois, 38050 Grenoble Cédex 09 (FR)
(74) Mandataire: Tripodi, Paul

(56) Documents cités:
- US-B1- 6 541 933

## Description

### DOMAINE TECHNIQUE

L'invention concerne un dispositif de commande d'un convertisseur comportant des moyens de contrôle de semi-conducteurs de puissance pour fournir depuis une alimentation au moins une tension pulsée à une charge électrique connectée audit convertisseur par au moins deux conducteurs d'au moins une ligne d'alimentation. Un tel dispositif est divulgué dans le document JP 2003 209973.

### ETAT DE LA TECHNIQUE

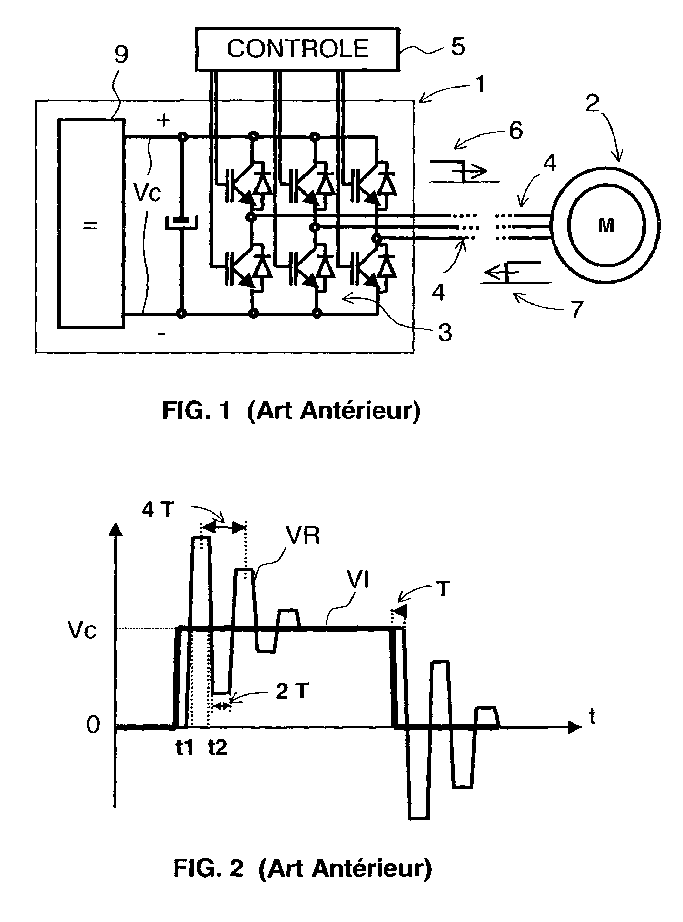

Un convertisseur 1 de type variateur de vitesse pour moteur électrique 2 comme celui représenté sur la figure 1 comporte des semi-conducteurs 3 de puissance pour hacher une tension électrique Vc continue en modulation de largeur d'impulsion. La structure d'un tel convertisseur est généralement composée d'un redresseur ou une alimentation 9 ayant une entrée connectée à une ligne de réseau électrique en courant alternatif et une sortie fournissant au moins une tension en courant continu ou redressé VC à un onduleur ou un hacheur comprenant des bras à semi-conducteurs 3 de puissance. En sortie des bras, une ligne d'alimentation 4 et reliée à une charge électrique 2 de type moteur synchrone ou asynchrone pour fournir une tension électrique pulsée. Un dispositif de commande 5 du convertisseur contrôle la conduction et le blocage des semi-conducteurs.

Dans le cas de convertisseurs connectés par des câbles longs à des charges, notamment des convertisseurs 1 de variateurs de vitesse connectés à des moteurs 2, des perturbations générées par des fronts montants ou descendants 6 et/ou 7 de tension peuvent dégrader les composants électriques. Par exemple, les stress électriques subits par des isolants des enroulements d'un moteur 2 éloigné de plusieurs mètres d'un variateur de vitesse sont dus à des fronts de tension 6 et 7 ayant une très forte variation de tension générée par un convertisseur 1 à modulation de largeur d'impulsion. Lorsque la longueur de câble de la ligne d'alimentation 4 est élevée, les surtensions dues aux réflexions de fronts de tension sur la charge et le convertisseur peuvent atteindre deux fois la tension de l'alimentation continue Vc du convertisseur. Ces surtensions sont aussi la conséquence des performances des semi-conducteurs de puissance qui peuvent facilement commuter la tension continue d'alimentation en un temps de montée inférieur à la microseconde. La figure 2 montre des signaux représentatifs d'impulsions de tension VI du convertisseur et de surtensions VR dues à des réflexions de tension desdites impulsions. Les surtensions comportent des oscillations dues aux allés et retours de la propagation des fronts sur la ligne. Le taux de propagation sur la ligne par unité de longueur dépend de la constitution des câbles d'alimentation, le taux de réflexion et d'atténuation dépend de la charge connectée. La fréquence des oscillations est fonction de la durée de propagation dépendant elle-même de la longueur des câbles et du taux de propagation.

Des surtensions répétitives subies par les enroulements d'un moteur provoquent un vieillissement prématuré des isolants et par conséquent une forte réduction de la durée de vie dudit moteur.

En plus, des surtensions apparaissant sur le moteur, les variations de tensions provoquent des perturbations électromagnétiques importantes.

Il est connu d'utiliser des filtres passifs pour limiter les effets des surtensions et des perturbations. Des filtres passifs disposés du côté de la charge ou du moteur diminuent les surtensions causées par la longueur du câble de la ligne d'alimentation. Des filtres passifs disposés du côté des convertisseurs réduisent les variations de tension générées par le découpage des semi-conducteurs.

Les filtres à inductances et capacités du côté de la charge sont chers et volumineux du fait de la taille des composants passifs utilisés. De plus, ces filtres risquent de provoquer des résonances en fonction de la charge et certaines fréquence du convertisseur. Un autre inconvénient des filtres concerne les fréquences de coupure qu'il faut adapter en changeant de composants selon les charges. Du côté des convertisseurs, les filtres limitant la variation de tension et de courant sont moins volumineux mais présentent l'inconvénient de provoquer des pertes importantes à cause des forts courants qui les traversent.

Certains dispositifs comme celui décrit dans le document JP2003209973 évitent les oscillations dues aux résonances des composantes inductives et capacitives des lignes. Cependant, leurs structures à inductances réactives ont les mêmes défauts que les filtres. De plus, ils ne sont pas prévus pour contrôler surtensions dues aux réflexions sur les lignes.

### EXPOSE DE L'INVENTION

L'invention a pour but un dispositif et un procédé de commande d'un convertisseur permettant de limiter sur une charge des surtensions dues à des commutations et en évitant des filtres passifs trop volumineux

Un dispositif selon l'invention est défini dans la revendication 1.

Un procédé selon l'invention est defini dans la revendication 14.

De préférence, ladite durée de retard étant comprise entre une fois et trois fois un temps de propagation d'un front de tension sur ladite ligne.

Avantageusement, la durée de retard est comprise entre 1,5 et 2,5 fois le temps de propagation sur ladite ligne. En particulier, la durée de retard est sensiblement égale à 2 fois le temps de propagation sur ladite ligne.

De préférence, la valeur intermédiaire de la tension pulsée est sensiblement égale à la moitié de la tension d'alimentation.

Dans un mode de réalisation préférentiel, les moyens de contrôle contrôlent des semi-conducteurs de puissance pour arrêter de fournir sur des conducteurs de la ligne une tension pulsée ayant un troisième front entre la valeur d'amplitude et une valeur intermédiaire puis un quatrième front entre ladite valeur intermédiaire et une valeur faible ou nulle après une durée de retard prédéterminée.

De préférence, la durée de retard à la décroissance est comprise entre une fois et trois fois un temps de propagation d'un front de tension sur ladite ligne.

Avantageusement, les moyens de contrôle comportent des moyens de limitation de variation de tension d'au moins un desdits fronts.

Dans un mode de réalisation préférentiel, les moyens de limitation de variations de tension contrôlent des variations de tension à une première valeur sur le premier front et/ou le troisième front et à une seconde valeur de variation inférieure à la première valeur de variation sur le second front et/ou le quatrième front.

De préférence, le dispositif de commande comporte des moyens de détermination d'une durée de propagation d'un front de tension sur une ligne d'alimentation.

Avantageusement, le dispositif de commande comporte des moyens de mémorisation d'une valeur représentative d'une durée de propagation d'un front de tension sur une ligne d'alimentation.

De préférence le procédé de commande comporte :
- une étape 104 de durée d'impulsion pour faire durer une impulsion pendant une période,
- une troisième étape de front de tension pour provoquer un front de réduction tension entre une valeur d'amplitude d'impulsion et une valeur intermédiaire,
- une seconde étape de délai pour introduire un retard, et
- une quatrième étape de front de tension pour provoquer un front de réduction tension entre une valeur une valeur intermédiaire et une valeur initiale,

Avantageusement, la première étape de front de tension, la seconde étape de front de tension, la troisième étape de front de tension et/ou la quatrième étape de front de tension contrôlent les fronts de tension en limitant la variation de tension.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 représente un schéma d'une installation comportant un convertisseur de l'art antérieur utilisé comme variateur de vitesse pour alimenter un moteur ;
- la figure 2 illustre des signaux de tension et de fronts de tension circulant sur une ligne d'alimentation provoqués par un convertisseur de l'art antérieur ;
- les figures 3A à 3C illustrent des courbes de signaux de tension sur une ligne connectée à un convertisseur selon un premier mode de réalisation de l'invention ;
- la figure 4 représente un schéma bloc d'une installation comportant un convertisseur selon un mode de réalisation de l'invention utilisé comme variateur de vitesse pour alimenter un moteur ;
- les figures 5A à 5C illustrent des courbes de signaux de tension sur une ligne connectée par un convertisseur selon un premier mode de réalisation de l'invention ;
- les figures 6A à 6C illustrent des courbes de signaux de tension sur une ligne connectée par un convertisseur selon un second mode de réalisation de l'invention ;
- la figures 7 illustre une courbe d'un signal de tension fournie par un convertisseur selon un premier mode de réalisation de l'invention ;
- la figures 8 illustre une courbe d'un signal de tension fournie par un convertisseur selon un second mode de réalisation de l'invention ;
- la figures 9 illustre une courbe d'un signal de tension fournie par un convertisseur selon un troisième mode de réalisation de l'invention ;
- la figure 10 représente des signaux de régulation à modulation de largeur d'impulsion dans un dispositif selon un mode de réalisation de l'invention ;
- la figure 11 représente un schéma d'un dispositif de commande selon un mode de réalisation de l'invention pour commander un convertisseur tel qu'un variateur de vitesse ;
- les figures 12 et 13 représentent des organigrammes de procédés selon des modes de réalisation de l'invention ;
- les figures 14, 15 et 16 illustrent des courbes comparatives des tensions d'un convertisseur et des tensions de la charge respectivement avec un dispositif de l'état de la technique, avec un dispositif selon un premier mode de réalisation de l'invention et avec un dispositif selon un second mode de réalisation de l'invention.

### DESCRIPTION DETAILLEE DE MODES DE REALISATION PREFERES

Dans un dispositif selon un mode de réalisation de l'invention, un circuit de contrôle 5 contrôle des semi-conducteurs 3 pour fournir sur des conducteurs de la ligne 4 une première tension pulsée VI ayant à la croissance un premier front montant 10 entre une valeur V0 faible ou nulle et une valeur intermédiaire VM inférieure à une tension d'alimentation VC, puis un second front montant 11 entre ladite valeur intermédiaire VM et une valeur haute sensiblement égale à la tension d'alimentation VC après une durée T2 de retard à la croissance prédéterminée inférieure à deux fois une durée de propagation T sur la dite ligne entre ledit convertisseur et une charge.

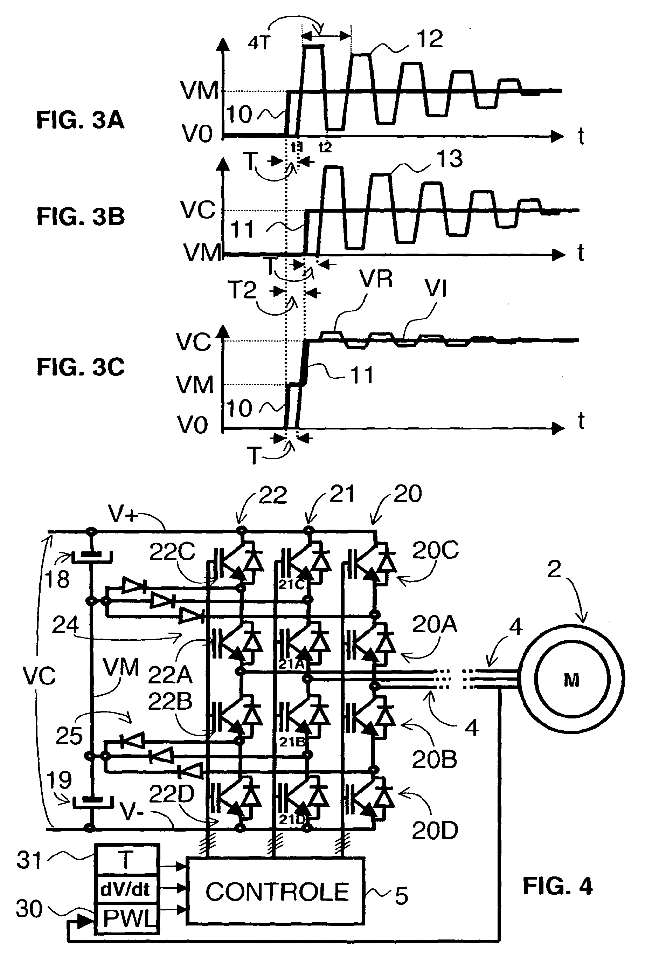

Dans le cas de la commande d'un moteur par un variateur de vitesse, l'impédance des enroulements du moteur est supérieure celle de la ligne et l'impédance du convertisseur est inférieure à celle de la ligne, par conséquent la réflexion est positive avec une valeur maximale de +1 du coté du moteur et la réflexion est négative jusqu'à -1 du coté du convertisseur avec inversion de la tension. Le front montant 10 représenté sur la figure 3A génère des oscillations 12 dont la fréquence est de quatre fois le temps de propagation T sur la ligne. L'amplitude se décomposant par une augmentation de la tension à l'allée par réflexion sur le moteur à un instant tl, une inversion au retour par réflexion sur le convertisseur à l'instant t2, puis de nouveau réflexion sur le moteur. Dans un dispositif selon un mode de réalisation de l'invention, un second front montant 11 est appliqué avec un retard T2 de préférence de l'ordre de deux fois le temps de propagation comme illustré sur la figure 3B pour correspondre à un allé et retour d'un front sur la ligne. Le second front 11 génère aussi des oscillations 13 ayant des caractéristiques similaires aux oscillations 12 provoquées par premier front 10. Le retard T2 du second front permet de compenser les oscillations et les perturbations générées par le premier front 10. La figure 3C illustre la combinaison du premier et du second front de tension pour constituer une impulsion VI d'alimentation de la charge. L'impulsion VI débutant par deux fronts montants décalés produit des perturbations VR avec des surtensions très réduites.

Le retard T2 entre les deux fronts montants est choisi entre une fois et trois fois le temps T de propagation sur la ligne entre le convertisseur et la charge, par exemple le moteur. De préférence, le retard T2 est compris entre 1,5 fois et 2,5 fois le temps T de propagation. Pour une compensation très efficace, le retard T2 est avantageusement choisi sensiblement autour de deux fois le temps T de propagation.

La figure 4 montre la structure d'un convertisseur avec un dispositif de contrôle selon un mode de réalisation de l'invention. Dans ce convertisseur, une tension médiane VM est générée sur un point commun de deux condensateurs 18 et 19 connectés en série entre les tensions V+ positive et V- négative de la tension continue VC. Ce convertisseur comprend trois bras 20, 21, 22 pour produire une tension triphasée qui alimente un moteur 2. Chaque bras comprend des semi-conducteurs de puissance permettant de fournir les premiers fronts et les seconds fronts.

Les fronts comportent trois niveaux de tension dans un sens montant ou descendants et de polarité positive ou négative selon le signe de courant sortant de chaque bras vers un conducteur de la ligne. Selon le sens du front montant ou descendant, les semi-conducteurs sont commander à l'amorçage correspondant au début de conduction et au blocage pour fournir les trois niveaux de tension.

Dans le cas où le courant sortant du convertisseur est positif, chaque bras comporte un semi-conducteur 20A, 21 A ou 22A pouvant être commandé à l'amorçage pour fournir un premier front positif de tension intermédiaire VM à travers une des diodes 24 et au blocage pour fournir un second front de tension négatif depuis la ligne d'alimentation négative V-accessible par les diodes des semi-conducteurs 20B - 20D, 21B - 21 D ou 228 - 22D. Chaque bras comporte aussi un semi-conducteur 20C, 21C ou 22C pouvant être commandé à l'amorçage pour fournir un second front de tension positif depuis la ligne d'alimentation positive V+ et au blocage pour fournir un premier front négatif de tension intermédiaire VM à travers une des diodes 24.

Dans le cas ou le courant sortant du convertisseur est négatif, chaque bras comporte un semi-conducteur 20B, 21B ou 22B pouvant être commandé à l'amorçage pour fournir un premier front négatif de tension intermédiaire VM à travers une des diodes 25, et au blocage pour fournir un second front positif depuis la ligne d'alimentation positive V+ accessible par les diodes des semi-conducteurs 20A - 20C, 21A - 21C ou 22A - 22C. Chaque bras comporte aussi un semi-conducteur 20D, 21D ou 22D pouvant être commandé à l'amorçage pour fournir un second front négatif de tension depuis la ligne d'alimentation négative V- et au blocage pour fournir un premier front positif de tension intermédiaire VM à travers une des diodes 25.

Les semi-conducteurs sont notamment des transistors à effet de champs, a métal oxyde semi-conducteur ou bipolaires à grille isolée avec de préférence une diode anti-parallèle intégrée.

Pour combiner les fronts des impulsions avec une compensation par décalage, les semi-conducteurs sont commandés de préférence par séquences. Ainsi, le transistor 20C est commandé à l'amorçage après le transistor 20A avec un décalage de délai T2 et au blocage avant le transistor 20A avec un décalage d'un délai T2. De même, le transistor 20D est commandé à l'amorçage après le transistor 20B avec un décalage d'un délai T2 et au blocage avant le transistor 20B avec un décalage d'un délai T2. Les séquences de commande des transistors des autres bras respectivement 21C-21A, 21D-21B, 22C-22A et 22D-22B sont commandées de la même manière.

Dans le mode de réalisation de la figure 4, les semi-conducteurs sont de préférence commandés par couple. Ainsi, l'impulsion de commande du transistor 20C est le complément de l'impulsion de commande du transistor 20B au temps mort près, le temps mort étant réalisé par un retard à l'amorçage du transistor 20C et du transistor 20B. De même, l'impulsion de commande du transistor 20A est le complément de l'impulsion de commande du transistor 20D au temps mort près, le temps mort étant réalisé par un retard à l'amorçage du transistor 20A et du transistor 20D. Les couples de transistors des autres bras respectivement 21C-21B, 21A-21D, 22C-22B et 22A-22D sont commandés de la même manière. Les temps morts entre les commandes des semi-conducteurs sont indépendants par rapport au temps de retard T2.

La tension intermédiaire VM fournie sur un point commun des condensateurs 18 et 19 peut être aussi régulée ou équilibrée par des composants ou des circuits prévus à cet effet.

Sur la figure 4 le circuit de contrôle 5 commande les transistors en fonction d'une régulation par largeur d'impulsion 30, et d'un paramétrage 31 d'un temps de propagation T.

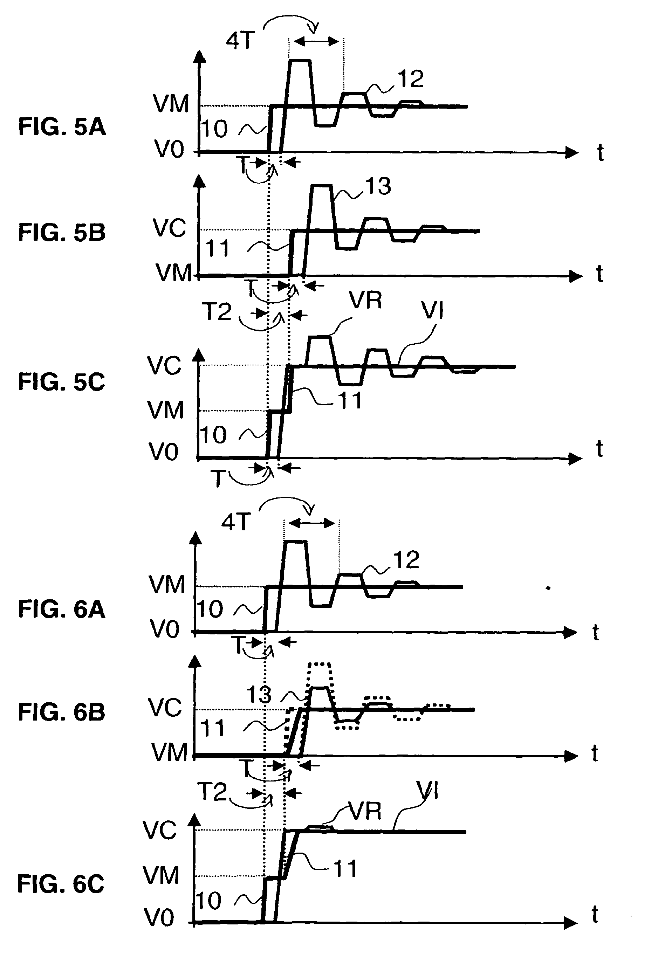

Lorsque des coefficients de réflexion côté charge et/ou côté convertisseur ne sont pas très élevés, par exemple lorsqu'ils ne sont pas proches de +1 ou de -1 respectivement, il peut rester encore quelques surtensions résiduelles qui ne sont pas complètement éliminées par la compensation de deux fronts décalés. Comme sur les figures 5A à 5C, les oscillations 12 et 13 sont rapidement atténuées par de mauvais coefficients de réflexion par exemple de l'ordre de 0,6. Il y a alors des surtensions résiduelles VR sur le signal d'impulsion VI. Ces surtensions sont très réduites par rapport à celles de la figure 2 mais elles peuvent être avantageusement réduites.

Dans un mode de réalisation avantageux de l'invention, un dispositif de commande comporte des moyens pour contrôler la variation de tension des fronts de tension des impulsions. Avantageusement, la variation de tension du second front est inférieure à la variation de tension du premier front. Ainsi, sur les figures 6A à 6C un premier front a une variation de tension élevée et génère des oscillations de grande amplitude rapidement atténuées par une mauvaise réflexion, ensuite un front 11 a une variation de tension limitée représentée par une pente sur la figure 6B. Cette variation génère des oscillations de plus faible amplitude adaptée pour compenser des oscillations atténuées du premier front. Les oscillations 13 produites par le second front 11 sont aussi réduites à cause de la variation réduite dudit second front. La combinaison des fronts représentée sur la figure 6C montre une impulsion VI avec une très faible surtension d'oscillation VR.

Avantageusement, des fronts consécutifs peuvent être aussi utilisés à la fin d'une impulsion en particulier pour diminuer des oscillations et des perturbations électromagnétiques.

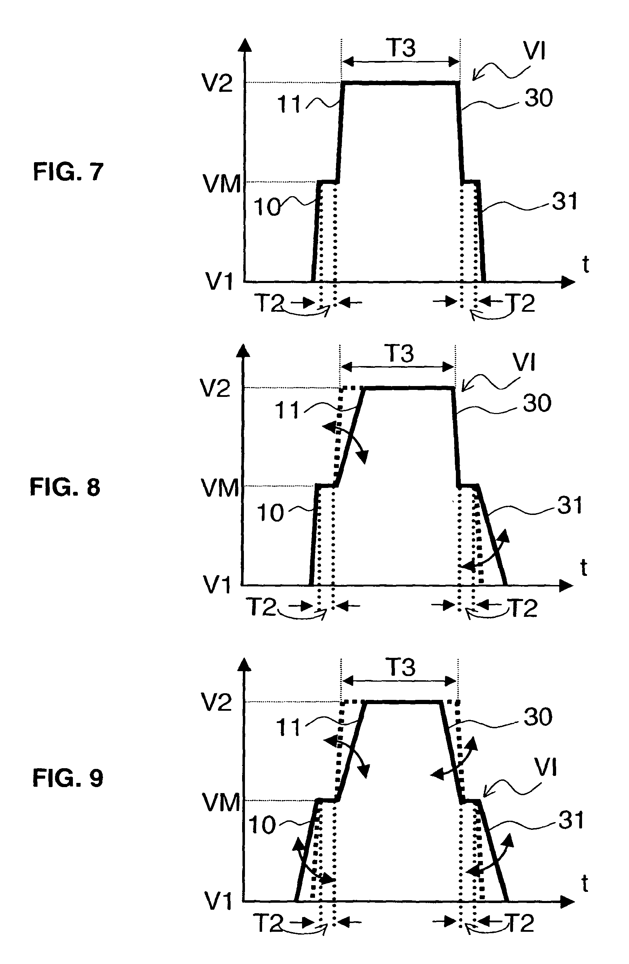

Les figure 7, 8 et 9 montrent des impulsions complètes en modulation de largeur d'impulsion où les transistors des bras sont successivement bloqués et/ou conducteurs selon le sens du courant et de la tension à fournir dans les conducteurs de la ligne. Ainsi, selon la tension à fournir sur la ligne les tensions V1, VM, et V2 sont positives ou négatives.

Sur la figure 7, l'impulsion VI commence par un premier front 10 sans entre une première valeur V1 faible ou nulle et une valeur intermédiaire VM, puis un second front entre la valeur intermédiaire VM et une valeur V2 d'amplitude d'impulsion retardée d'un délai T2, ensuite pendant une durée T3 d'impulsion la tension reste à environ V2. Pour terminer l'impulsion un troisième front 30 réduit la tension entre la valeur V2 et une valeur intermédiaire VM, puis après un délai T2 un quatrième front réduit la tension entre la valeur intermédiaire VM et une valeur VI faible ou nulle.

Dans le mode de réalisation préférentiel de la figure 8, le signal comporte un contrôle de la variation de tension dv/dt sur le second et le quatrième front pour améliorer la compensation lorsque les réflexions ne sont pas très bonnes et réduire significativement les perturbations électromagnétiques conduites et rayonnées. Pour rendre encore plus efficace la réduction des perturbations électromagnétiques, le signal d'impulsion VI de la figure 9 comporte un contrôle de variation de tension sur tous les fronts. De préférence, pour minimiser et répartir de façon équitable les pertes dans les semi-conducteurs tous en gardant un rendement élevé, la variation de tension du second front est contrôlée pour être inférieure à celle du second front et la variation de tension du quatrième front est contrôlée pour être inférieure à celle du troisième front.

Par exemple, les variations de tension d'un premier et/ou d'un troisième front peuvent être supérieures à 5 kV/µS et les variations du second et/ou du quatrième front peuvent être de 1 à 5 kV/µS. Selon le sens de la tension, ces valeurs préférentielles peuvent être positives ou négatives.

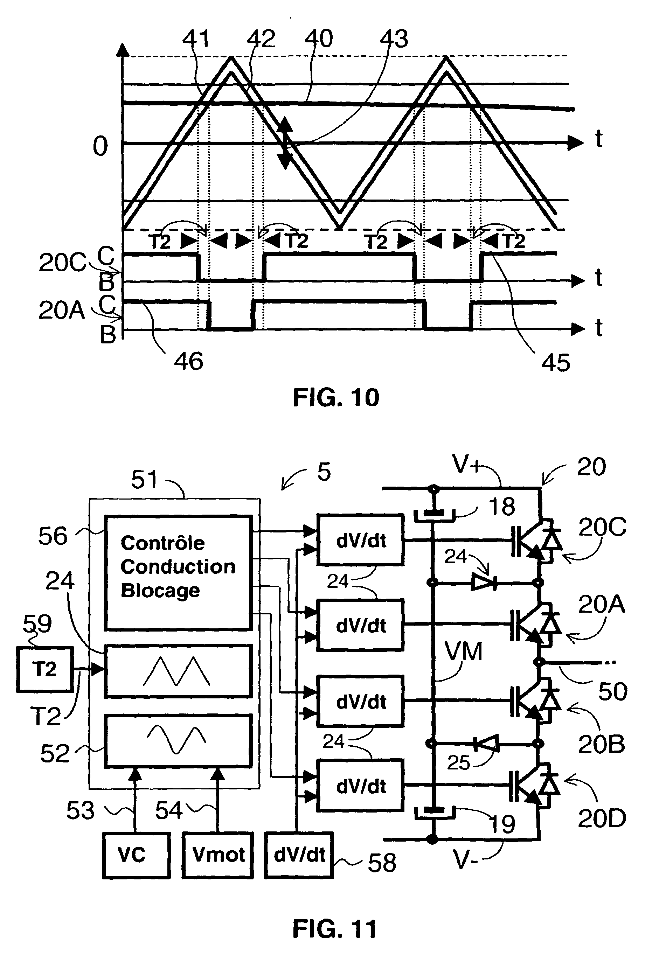

La figure 10 montre des signaux de régulation à modulation de largeur d'impulsion dans un dispositif selon un mode de réalisation de l'invention. Une courbe 40 représente un signal de référence notamment un signal sinusoïdal. Des signaux de modulation 41 et 42 sont comparés au signal de référence 40 pour commander le blocage ou la conduction des semi-conducteurs de puissance, notamment des transistors 20C et 20A représentés respectivement par des courbes 45 et 46. Un décalage 43 entre les signaux de modulation 41 et 42 permet d'appliquer un délai T2 entre les commandes des semi-conducteurs pour fournir des fronts de tension successifs.

Un schéma bloc d'un circuit de contrôle montre la commande de conduction ou blocage d'un bras 20 de convertisseur pour fournir une tension sur un conducteur 50 d'une ligne. Le circuit de contrôle comporte un circuit de commande à modulation de largeur d'impulsion 51 avec un module de régulation 52 recevant des signaux de tension d'alimentation 53 et des signaux de tension de la charge 54. Un module 55 de modulation de largeur d'impulsion reçoit des signaux du module 52 de régulation et des signaux représentatifs de délai T2 pour des signaux de commande à un module 56 de contrôle de la conduction et du blocage des semi-conducteurs de puissance. Le module 56 fournit des signaux de commande aux semi-conducteurs de puissance à travers des circuits de contrôle de variation de tension 57. L'activation de la limitation de variation de tension est commandée par un circuit 58 d'activation. Des valeurs ou des variations de tension peuvent être aussi fournies par le circuit 58.

La valeur du délai T2 entre un premier front et un second front peut être mémorisée dans un circuit de paramétrage 59. La valeur de T2 dépendante d'un temps de propagation entre le convertisseur et la charge peut être déterminée en fonction des caractéristiques de la ligne, par mesure de temps au moment de la mise en route de l'installation ou de manière automatique par un dispositif de mesure de temps de propagation fournissant une valeur de temps T.

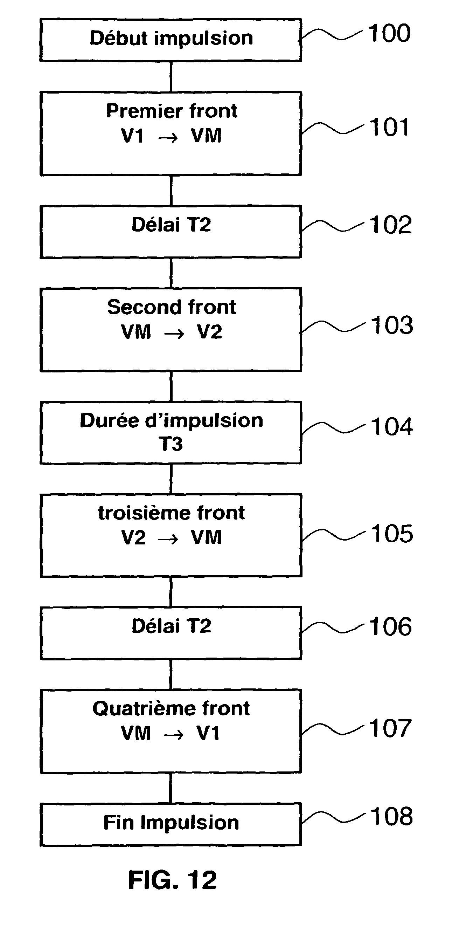

La figure 12 représente un organigramme d'un procédé de commande d'un convertisseur selon un mode de réalisation de l'invention. Une étape 100 définit le début le l'impulsion, puis à une étape 101 un premier front de tension entre une valeur initiale V1 et une valeur intermédiaire VM est appliqué. Ensuite, une étape de délai 102 applique un retard de valeur T2. Puis, à une étape 103 un second front de tension entre une valeur intermédiaire et une valeur V2 d'amplitude d'impulsion est appliqué. A une étape 104, une impulsion dure pendant une période T3 définie par la modulation de largeur d'impulsion. Ensuite, à une étape 105, un troisième front réduit l'impulsion entre la valeur V2 et une valeur intermédiaire VM. Puis, une étape de délai 106 introduit un retard T2, avant qu'une étape 107 provoque un quatrième front réduisant la tension de la valeur intermédiaire VM à la valeur V1. Une étape 108 définit la fin d'une impulsion.

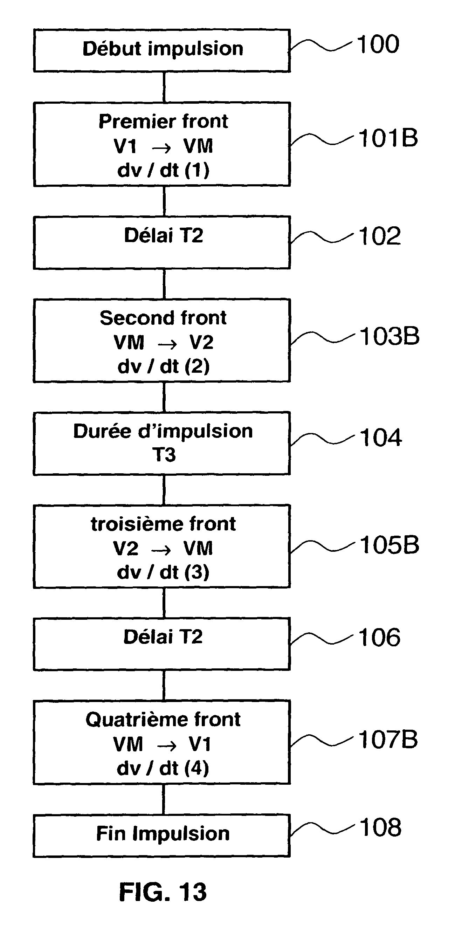

Sur la figure 13 un organigramme représente un procédé où les étapes 101, 103, 105 et 107 concernant des fronts ont été remplacées par des étapes respectivement 101B, 103B, 105B et 107B avec les mêmes fonctions et comportant en plus un contrôle des variations de tension en dv/dt.

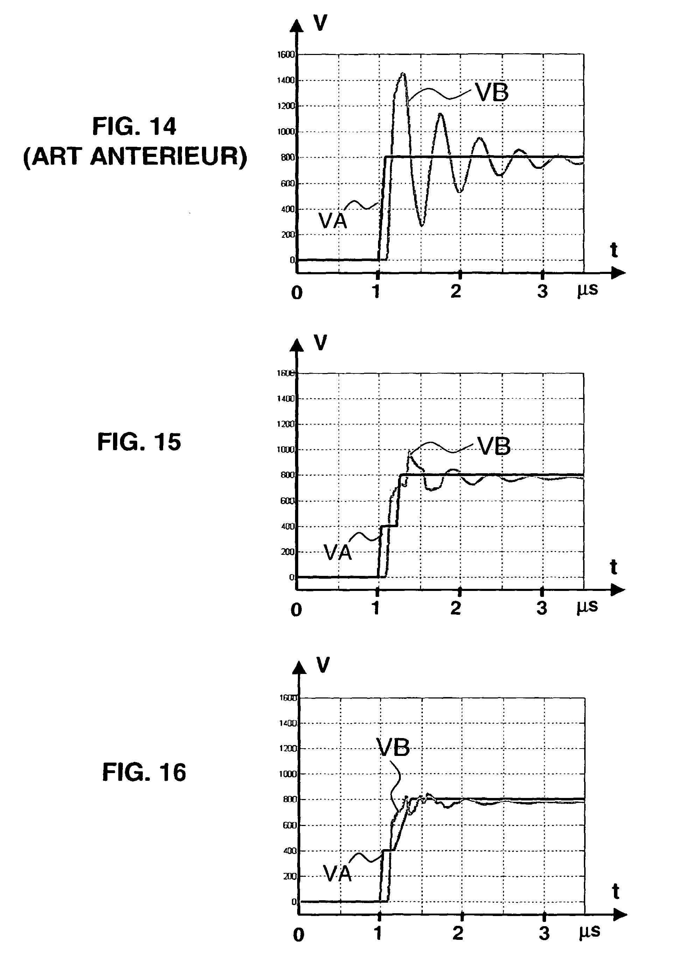

Les figures 14 montrent des relevés de signaux tension VA du côté convertisseur et VB du côté moteur sur le début d'une impulsion VI. Sur la figure 14, les signaux correspondent à une installation de l'art antérieur où il y a un seul front de tension. La figure 15 montre des signaux avec un dispositif selon un premier mode de réalisation de l'invention avec deux fronts successifs retardés. La figure 15 montre des signaux avec un dispositif selon un second mode de réalisation de l'invention avec deux fronts successifs retardés et une limitation de la variation de tension sur le second front.

Dans les modes de réalisation et les figures décrits ci-dessus les tensions sont représentées de manière positive mais des tensions négatives sont aussi concernées par l'invention. Les semi-conducteurs de puissance peuvent être de plusieurs types par exemple des transistors bipolaires de préférence à grille isolée, ou des transistors à effets de champs.

Les convertisseurs peuvent être appliqués à plusieurs domaines, en particulier cette invention est appliquée aux variateurs de vitesse pour moteurs.

## Revendications

1. Dispositif de commande d'un convertisseur (1) comportant des moyens (5) de contrôle de semi-conducteurs de puissance (3, 20, 21, 22) pour fournir depuis une tension d'alimentation (VC, V2) au moins une tension pulsée (VI) à une charge électrique (2) connectés audit convertisseur par au moins deux conducteurs d'au moins une ligne d'alimentation (4) lesdits, moyens de contrôle (5) contrôlent des semi-conducteurs de puissance (20; 20A-20D, 21A-21D, 22A-22D) pour fournir sur des conducteurs de la ligne (4) une première tension pulsée ayant un premier front (10) entre une première valeur (V0, V1) faible ou nulle et une valeur intermédiaire, (VM) puis un second front (11) entre ladite valeur intermédiaire (VM) et la tension d'alimentation (VC, V2) après une durée (T2) de retard prédéterminée pour compenser des effets de réflexion de tension sur ladite ligne, **caractérisé en ce que**
- ladite alimentation (VC,V2) comportant une tension positive (V+), une tension négative (V-), et une tension médiane (VM), et
- lesdits semi-conducteurs de puissance étant connectés en bras (20, 21, 22), chaque bras compostant :
- des premiers semi-conducteurs de puissance (20A, 21A, 22A, 20B, 21B, 22B) connectés en série avec des diodes (24, 25) entre un point commun de tension médiane (VM) et ladite ligne d'alimentation (4) pour fournir une valeur intermédiaire (VM) du premier front (10), et
- des seconds semi-conducteurs de puissance (20, 21C, 22C, 20D, 21D, 22D) connectés entre des lignes d'alimentation (VC,V2) de tension positive (V+) et négative (V-) et lesdits premiers semi-conducteurs de puissance (20A, 21 A, 22A, 20B, 21B. 22B) pour fournir ladite tension d'alimentation (VC, V2) du seconde front (11).

2. Dispositif selon la revendication 1 **caractérisé en ce que** ladite durée de retard étant comprise entre une fois et trois fois un temps (T) de propagation d'un front de tension sur ladite ligne.

3. Dispositif selon l'une des revendications 1 ou 2 **caractérisé en ce que** la durée de retard (T2) est comprise entre 1,5 et 2,5 fois le temps de propagation sur ladite ligne.

4. Dispositif selon l'une quelconque des revendications 1 à 3 **caractérisé en ce que** la durée de retard (T2) est sensiblement égale à 2 fois le temps de propagation sur ladite ligne.

5. Dispositif selon l'une quelconque des revendications 1 à 4 **caractérisé en ce que** la valeur intermédiaire (VM) de la tension pulsée est sensiblement égale à la moitié de la tension d'alimentation (VC, V2).

6. Dispositif selon l'une quelconque des revendications 1 à 5 **caractérisé en ce que** les moyens de contrôle (5) contrôlent des semi-conducteurs de puissance pour arrêter de fournir sur des conducteurs de la ligne une tension pulsée (VI) ayant un troisième front (30) entre la dite tension d'alimentation (VC, V2) et une valeur intermédiaire (VM) puis un quatrième front entre ladite valeur intermédiaire (V4) et ladite, valeur (V0, V1) faible ou nulle après une durée de retard (T2) prédéterminée.

7. Dispositif selon la revendication 6 **caractérisé en ce que** la durée de retard (T2) à la décroissance est comprise entre une fois et trois fois un temps (T) de propagation d'un front de tension sur ladite ligne.

8. Dispositif selon l'une quelconque des revendications 1 à 7 **caractérisé en ce que** les moyens de contrôle comportent des moyens (57, 101B, 103B, 1058, 107B) de limitation de variation de tension (dv/dt) d'au moins un desdits fronts (10,11, 30, 31).

9. Dispositif selon la revendication 8 **caractérisé en ce que** les moyens de limitation de variations de tension contrôlent des variations de tension à une première valeur sur le premier front (10) et/ou le troisième (30) front et à une seconde valeur de variation inférieure à la première valeur de variation sur le second front (11) et/ou le quatrième front (31).

10. Dispositif selon l'une quelconque des revendications 1 à 9 **caractérisé en ce qu'**il comporte des moyens de détermination d'une durée (59) de propagation d'un front de tension sur une ligne (4) d'alimentation.

11. Dispositif selon l'une quelconque des revendications 1 à 10 **caractérisé en ce qu'**il comporte des moyens de mémorisation (59) d'une valeur représentative d'une durée de propagation d'un front de tension sur une ligne d'alimentation (4).

12. Convertisseur (1) électrique comportant :
- une alimentation (9; VC, V2) de tension continue,
- lesdits semi-conducteurs de puissance (20, 20A-20D, 21, 21A-21D, 22, 22A-22D) connectés entre l'alimentation de tension continue (VC, V2) et ladite ligne (4) de sortie d'alimentation de charge (2), et
- des moyens (18, 19) pour fournir ladite tension continue médiane (VM) de valeur située entre ladite valeur de tension négative (V-) et ladite valeur de tension positive (V+),
**caractérisé en ce qu'**il comporte un dispositif de commande selon l'une quelconque des revendications 1 à 11 pour commander les semi-conducteurs de puissance.

13. Installation électrique comportant :
- un convertisseur (1) comportant :
- ladite alimentation (9; VC, V2) de tension continue,
- lesdits semi-conducteurs de puissance (20, 20A-20D, 21, 21A-21D, 22, 22A-22D) connectés entre l'alimentation de tension continue et au moins une ligne (4) de sortie d'alimentation de charge, et
- des moyens (18, 19) pour fournir ladite tension continue médiane (VM) de valeur située entre ladite valeur de tension négative (V-) et ladite valeur de tension positive (V+),
- une charge électrique (2) alimentée pour recevoir une tension pulsée (VI) fournie par ledit convertisseur (1), et
- ladite ligne électrique (4) pour relier ladite charge (2) électrique au convertisseur (1),
**caractérisée en ce que** le convertisseur comporte un dispositif de commande selon l'une quelconque des revendications 1 à 11 pour commander les semi-conducteurs de puissance.

14. Procédé de commande d'un convertisseur (1) comportant une tension d'alimentation (VC, V2) comportant une tension positive (V+), une tension négative (V-), et une tension médiane (VM), et des semi-conducteurs (20 ; 20A-20D, 21A-21D, 22A-22D) de puissance connectés en bras (20, 21, 22), pour fournir une tension pulsée (VI) à une charge électrique (2),
ledit procédé comporte :
- une première étape de front de tension (101, 101B) pour fournir un premier front (10) de tension entre une valeur initiale (V0, V1) et une valeur intermédiaire (VM) par la commande de premiers semi-conducteurs de puissance (20A, 21 A, 22A, 20B, 21B, 22B) connectés en série avec des diodes (24, 25) entre un point commun de tension médiane (VM) et une ligne (4) pour fournir une valeur intermédiaire (VM) du premier front (10),
- une première étape de délai (102) pour introduire un retard (T2), et
- une seconde étape de front (103, 103B) pour fournir un second front de tension (11) entre ladite valeur intermédiaire (VM) et ladite tension d'alimentation (VC, V2) pour compenser des effets de réflexion de tension par la commande des seconds semi-conducteurs de puissance (20C, 21C, 22C, 20D, 21D, 22D) connectés entre des lignes d'alimentation (VC, V2) de tension positive (V+) et négative (V-) et lesdits premiers semi-conducteurs de puissance (20A, 21A, 22A, 20B, 21B, 22B) pour fournir ladite tension d'alimentation (VM, V2) du second front (11).

15. Procédé de commande selon la revendication 14 **caractérisé en ce qu'**il comporte:
- une étape (104) de durée d'impulsion pour faire durer une impulsion pendant une période (T3),
- une troisième étape de front de tension (105, 105B) pour provoquer un front (30) de réduction de tension entre ladite tension d'alimention (VC, V2) et ladite valeur intermédiaire (VM),
- une seconde étape de délai (106) pour introduire un retard (T2), et
- une quatrième étape de front de tension (107, 107B) pour provoquer un front (31) de réduction de tension entre ladite valeur intermédiaire (VM) et ladite valeur initiale (V0 V1),

16. Procédé de commande selon la revendication 14 **caractérisé en ce que** la première étape (101B) de front de tension, la seconde étape (103B) de front de tension, la troisième étape (105B) de front de tension et/ou la quatrième étape (107B) de front de tension contrôlent les fronts de tension en limitant la variation de tension (dv/dt).

## Claims

1. A control device of a converter (1) comprising means (5) for controlling power semi-conductors (3, 20, 21, 22) to supply at least one pulsed voltage (VI) from a power supply voltage (VC, V2) to an electric load (2) connected to said converter by at least two conductors of at least one power supply line (4), said control means (5) controlling power semi-conductors (20, 20A-20D, 21A-21D, 22A-22D) to supply, on conductors of the line (4), a first pulsed voltage having a first front (10) between a first low or zero value (V0, V1) and an intermediate value (VM), then a second front (11) between said intermediate value (VM) and the power supply voltage (VC, V2) after a preset time delay (T2) to compensate voltage reflection effects on said line, **characterized in that**
- said power supply voltage (VC, V2) comprising a positive voltage (V+), a negative voltage (V-), and an intermediate voltage (VM), and
- said power semi-conductors being connected to form arms (20, 21, 22), each arm comprising:
- first power semi-conductors (20A, 21A, 22A, 20B, 21B, 22B) connected in series with diodes (24, 25) between a common intermediate voltage point (VM) and said power supply line (4) to supply an intermediate value (VM) of the first front (10), and
- second power semi-conductors (20C, 21C, 22C, 20D, 21D, 22D) connected between power supply lines (VC, V2) supplying positive voltage (V+) and negative voltage (V-) and said first power semi-conductors (20A, 21 A, 22A, 20B, 21B, 22B) to supply said power supply voltage (VC, V2) of the second front (11).

2. The device according to claim 1 **characterized in that** said time delay is comprised between one and three times a propagation time (T) of a voltage front on said line.

3. The device according to one of claims 1 or 2 **characterized in that** the time delay (T2) is comprised between 1.5 and 2.5 times the propagation time on said line.

4. The device according to any one of claims 1 to 3 **characterized in that** the time delay (T2) is substantially equally to twice the propagation time on said line.

5. The device according to any one of claims 1 to 4 **characterized in that** the intermediate value (VM) of the pulsed voltage is substantially equally to one half of the supply voltage (VC, V2).

6. The device according to any one of claims 1 to 5 **characterized in that** the control means (5) control power semi-conductors to stop the supply, on conductors of the line, of a pulsed voltage (VI) having a third front (30) between said power supply voltage (VC, V2) and an intermediate value (VM) then a fourth front between said intermediate value (VM) and said low or zero value (V0, V1) after a preset time delay (T2).

7. The device according to claim 6 **characterized in that** the time delay (T2) on decrease is comprised between one and three times a propagation time (T) of a voltage front on said line.

8. The device according to any one of claims 1 to 7 **characterized in that** the control means comprise means (57, 101B, 103B, 105B, 107B) for limiting the voltage variation (dv/dt) of at least one of said fronts (10, 11, 30, 31).

9. The device according to claim 8 **characterized in that** the means for limiting voltage variations control voltage variations to a first value on the first front (10) and/or third front (30) and to a second variation value lower than the first variation value on the second front (11) and/or fourth front (31).

10. The device according to any one of claims 1 to 9 **characterized in that** it comprises means for determining a propagation time (59) of a voltage front on a power supply line (4).

11. The device according to any one of claims 1 to 10 **characterized in that** it comprises means (59) for storing a value representative of a propagation time of a voltage front on a power supply line (4).

12. An electric converter (1) comprising:
- a DC voltage supply (9; VC, V2),
- said power semi-conductors (20, 20A-20D, 21, 21A-21D, 22, 22A-22D) connected between the DC voltage supply (VC, V2) and said load power supply output line (4) supplying the load (2), and
- means (18, 19) for supplying said intermediate DC voltage (VM) with a value situated between said negative voltage value (V-) and said positive voltage value (V+),
**characterized in that** it comprises a control device according to any one of claims 1 to 11 to control the power semi-conductors.

13. An electric installation comprising:
- a converter (1) comprising:
- said DC voltage power supply (9; VC, V2),
- said power semi-conductors (20, 20A-20D, 21, 21A-21D, 22, 22A-22D) connected between the DC voltage power supply and at least one power supply output line (4) supplying a load, and
- means (18, 19) for supplying said intermediate DC voltage (VM) with a value situated between said negative voltage value (V-) and said positive voltage value (V+),
- an electric load (2) supplied to receive a pulsed voltage (VI) supplied by said converter (1), and
- said electric line (4) to connect said electric load (2) to the converter (1),
**characterized in that** the converter comprises a control device according to any one of claims 1 to 11 to control the power semi-conductors.

14. A control process of a converter (1) comprising a power supply voltage (VC, V2) comprising a positive voltage (V+), a negative voltage (V-), and an intermediate voltage (VM), and power semi-conductors (20, 20A-20D, 21, 21A-21D, 22, 22A-22D) connected to form arms (20, 21, 22) to supply a pulsed voltage (VI) to an electric load (2),
said process comprising:
- a first voltage front step (101, 101B) to supply a first voltage front (10) between an initial value (V0, V1) and an intermediate value (VM) by commanding first power semi-conductors (20A, 21A, 22A, 20B, 21B, 22B) connected in series with diodes (24, 25) between a common intermediate voltage point (VM) and a line (4) to supply an intermediate value (VM) of the first front (10),
- a first time delay step (102) to introduce a time delay (T2), and
- a second voltage front step (103, 103B) to supply a second voltage front (11) between said intermediate value (VM) and a said power supply voltage (VC, V2) to compensate voltage reflection effects by commanding second power semi-conductors (20C, 21C, 22C, 20D, 21D, 22D) connected between power supply lines (VC, V2) supplying positive voltage (V+) and negative voltage (V-) and said first power semi-conductors (20A, 21 A, 22A, 20B, 21B, 22B) to supply said power supply voltage (VM, V2) of the second front (11).

15. The control process according to claim 14 **characterized in that** it comprises:
- a pulse duration step (104) to make a pulse last during a period (T3),
- a third voltage front step (105, 105B) to cause a voltage reduction front (30) between said power supply voltage (VC, V2) and said intermediate value (VM),
- a second time delay step (106) to introduce a time delay (T2), and
- a fourth voltage front step (107, 107B) to cause a voltage reduction front (31) between said intermediate value (VM) and said initial value (V0, V1).

16. The control process according to claim 14 **characterized in that** the first voltage front step (101B), second voltage front step (103B), third voltage front step (105B) and/or fourth voltage front step (107B) control the voltage fronts by limiting the voltage variation (dv/dt).

## Patentansprüche

1. Steuerungseinrichtung für einen Umrichter (1) mit Mitteln (5) zur Ansteuerung von Leistungshalbleitern (3, 20, 21, 22), um mindestens eine aus einer Versorgungsspannung (VC, V2) erzeugte Impulsspannung (VI) an einen, über mindestens zwei Leiter mindestens einer Stromversorgungsleitung (4) mit dem genannten Umrichter verbundenen elektrischen Verbraucher (2) zu liefern, wobei die genannten Ansteuerungsmittel (5) Leistungshalbleiter (20; 20A-20D, 21A-21D, 22A-22D) ansteuern, um zur Kompensation von Spannungsreflexionen in der genannten Leitung eine erste Impulsspannung mit einer ersten Flanke (10) zwischen einem ersten, kleinen oder auf null liegenden Wert (V0, V1) und einem mittleren Spannungswert (VM) sowie einer nach Ablauf einer bestimmten Verzögerungszeit (T2) mit einer zweiten Flanke (11) zwischen dem genannten mittleren Spannungswert (VM) und der Versorgungsspannung (VC, V2) in Leiter der Stromversorgungsleitung (4) zu injizieren, **dadurch gekennzeichnet, dass**
- die genannte Versorgungsspannung (VC, V2) eine positive Spannung (V+), eine negative Spannung (V-) und eine mittlere Spannung (VM) umfasst und dass
- die genannten Leistungshalbleiter in einzelne Zweige (20, 21, 22) geschaltet sind, wobei jeder Zweig
- erste Leistungshalbleiter (20A, 21 A, 22A, 20B, 21 B, 22B), die in Reihe mit Dioden (24, 25) zwischen einen gemeinsamen Anschlusspunkt mittlerer Spannung (VM) und die genannte Stromversorgungsleitung (4) geschaltet sind, um einen mittleren Spannungswert (VM) der ersten Flanke (10) zu liefern,
- sowie zweite Leistungshalbleiter (20C, 21C, 22C, 20D, 21D, 22D) umfasst, die zwischen Stromversorgungsleitungen (VC, V2) mit positiver Spannung (V+) und negativer Spannung (V-) sowie die genannten ersten Leistungshalbleiter (20A, 21A, 22A, 20B, 21 B, 22B) geschaltet sind, um die genannte Versorgungsspannung (VC, V2) der zweiten Flanke (11) zu liefern.

2. Einrichtung nach Anspruch 1, **dadurch gekennzeichnet, dass** die Dauer der genannten Verzögerungszeit zwischen dem einfachen und dem dreifachen Wert einer Laufzeit (T) liegt, in der sich eine Spannungsflanke in der genannten Leitung fortpflanzt.

3. Einrichtung nach einem der Ansprüche 1 oder 2, **dadurch gekennzeichnet, dass** die Verzögerungszeit (T2) zwischen dem 1,5-fachen und dem 2,5-fachen Wert der Laufzeit in der genannten Leitung liegt.

4. Einrichtung nach irgendeinem der Ansprüche 1 bis 3, **dadurch gekennzeichnet, dass** die Verzögerungszeit (T2) annähernd dem zweifachen Wert der Laufzeit in der genannten Leitung entspricht.

5. Einrichtung nach irgendeinem der Ansprüche 1 bis 4, **dadurch gekennzeichnet, dass** der mittlere Wert (VM) der Impulsspannung annähernd dem halben Wert der Versorgungsspannung (VC, V2) entspricht.

6. Einrichtung nach irgendeinem der Ansprüche 1 bis 5, **dadurch gekennzeichnet, dass** die Ansteuermittel (5) Leistungshalbleiter ansteuern, um die Injizierung einer Impulsspannung (VI) in Leiter der Stromversorgungsleitung mit einer dritten Flanke (30) zwischen der genannten Versorgungsspannung (VC, V2) und einem mittleren Spannungswert (VM) sowie nach Ablauf einer bestimmten Verzögerungszeit (T2) einer vierten Flanke zwischen dem genannten mittleren Spannungswert (VM) und dem genannten, kleinen oder auf null liegenden Wert (V0 V1) zu unterbrechen.

7. Einrichtung nach Anspruch 6, **dadurch gekennzeichnet, dass** die Dauer der genannten Verzögerungszeit (T2) bei abfallendem Signal zwischen dem einfachen und dem dreifachen Wert einer Laufzeit (T) beträgt, in der sich eine Spannungsflanke in der genannten Leitung fortpflanzt.

8. Einrichtung nach irgendeinem der Ansprüche 1 bis 7, **dadurch gekennzeichnet, dass** die Ansteuermittel Mittel (57, 101B, 103B, 105B, 107B) zur Begrenzung der Spannungsänderung (dv/dt) mindestens einer der genannten Flanken (10, 11,30, 31) umfassen.

9. Einrichtung nach Anspruch 8, **dadurch gekennzeichnet, dass** die Spannungsänderungs-Begrenzungsmittel die Spannungsänderung in der ersten und/oder dritten Flanke (10) auf einen ersten Wert und die Spannungsänderung in der zweiten Flanke (11) und/oder der vierten Flanke (31) auf einen, unter dem ersten Wert liegenden zweiten Wert steuern.

10. Einrichtung nach irgendeinem der Ansprüche 1 bis 9, **dadurch gekennzeichnet, dass** sie Mittel zur Bestimmung einer Laufzeit (59) einer Spannungsflanke in einer Stromversorgungsleitung (4) umfasst.

11. Einrichtung nach irgendeinem der Ansprüche 1 bis 10, **dadurch gekennzeichnet, dass** sie Mittel zur Speicherung (59) eines, eine Laufzeit einer Spannungsflanke in einer Stromversorgungsleitung (4) abbildenden Wertes umfasst.

12. Umrichter (1) mit
- einer Gleichspannungsversorgung (9 ; VC, V2),
- den genannten Leistungshalbleitern (20, 20A-20D, 21, 21A-21D, 22, 22A-22D), die zwischen die Gleichspannungsversorgung (VC, V2) und die genannte Ausgangsleitung (4) zur Stromversorgung eines Verbrauchers (2) geschaltet sind, sowie
- mit Mitteln (18, 19) zur Lieferung der genannten mittleren Gleichspannung (VM), deren Wert zwischen dem genannten negativen Spannungswert (V-) und dem genannten positiven Spannungswert (V+) liegt,
**dadurch gekennzeichnet, dass** er eine Steuerungseinrichtung nach irgendeinem der Ansprüche 1 bis 11 zur Ansteuerung der Leistungshalbleiter umfasst.

13. Elektroinstallation, die
- einen Umrichter (1) mit
- der genannten Gleichspannungsversorgung (9 ; VC, V2),
- den genannten Leistungshalbleitern (20, 20A-20D, 21, 21A-21D, 22, 22A-22D), die zwischen die Gleichspannungsversorgung (VC, V2) und die genannte Ausgangsleitung (4) zur Stromversorgung eines Verbrauchers (2) geschaltet sind, sowie
- mit Mitteln (18, 19) zur Lieferung der genannten mittleren Gleichspannung (VM), deren Wert zwischen dem genannten negativen Spannungswert (V-) und dem genannten positiven Spannungswert (V+) liegt,
- einen elektrischen Verbraucher (2) zur Beaufschlagung mit einer vom genannten Umrichter (1) gelieferten Impulsspannung (VI) sowie
- die genannte elektrische Leitung (4) zur Verbindung des genannten elektrischen Verbrauchers (2) mit dem Umrichter (1) umfasst,
**dadurch gekennzeichnet, dass** der Umrichter eine Steuerungseinrichtung nach irgendeinem der Ansprüche 1 bis 11 zur Ansteuerung der Leistungshalbleiter umfasst.

14. Steuerungsverfahren für einen Umrichter (1) mit einer Versorgungsspannung (VC, V2), die eine positive Spannung (V+), eine negative Spannung (V-) und eine mittlere Spannung (VM) umfasst, sowie mit in mehrere Zweige (20, 21, 22) geschalteten Leistungshalbleitern (20; 20A-20D, 21A-21D, 22A-22D) zur Lieferung einer Impulsspannung (VI) an einen elektrischen Verbraucher (2),
welches Verfahren
- einen ersten Spannungsflankenschritt (101, 101B) zur Lieferung einer ersten Spannungsflanke (10) mit einem Wert zwischen einem Anfangswert (V0, V1) und einem Zwischenwert (VM) durch Ansteuerung von in Reihe mit Dioden (24, 25) zwischen einen gemeinsamen Anschlusspunkt mittlerer Spannung (VM) und eine Leitung (4) geschalteten ersten Leistungshalbleitern (20A, 21 A, 22A, 20B, 21 B, 22B) zur Lieferung eines mittleren Spannungswerts (VM) der ersten Spannungsflanke (10),
- einen ersten Verzögerungsschritt (102) zum Einbringen einer Verzögerungszeit (T2) und
- einen zweiten Spannungsflankenschritt (103, 103B) zur Lieferung einer zweiten Spannungsflanke (11) mit einem Wert zwischen dem genannten mittleren Spannungswert (VM) und der genannten Versorgungsspannung (VC, V2) zur Kompensation von Spannungsreflexionen durch Ansteuerung der zwischen Stromversorgungsleitungen (VC, V2) mit positiver (V+) und negativer Spannung (V-) sowie die genannten ersten Leistungshalbleiter (20A, 21 A, 22A, 20B, 21 B, 22B) geschalteten zweiten Leistungshalbleiter (20C, 21C, 22C, 20D, 21D, 22D) zur Lieferung der genannten Versorgungsspannung (VC, V2) der zweiten Spannungsflanke (11).

15. Steuerungsverfahren nach Anspruch 14, **dadurch gekennzeichnet, dass** es
- einen Impulsdauerschritt (104) zur Aufrechterhaltung eines Impulses über eine Zeitdauer (T3),
- einen dritten Spannungsflankenschritt (105, 105B) zur Erzeugung einer Flanke (30) zur Spannungsabsenkung zwischen die genannte Versorgungsspannung (VC, V2) und den genannten mittleren Spannungswert (VM),
- einen zweiten Verzögerungsschritt (106) zur Aktivierung einer Verzögerungszeit (T2) und
- einen vierten Spannungsflankenschritt (107, 107B) zur Erzeugung einer Flanke (31) zur Spannungsabsenkung zwischen den genannten mittleren Spannungswert (VM) und den genannten Anfangswert (V0, V1) umfasst.

16. Steuerungsverfahren nach Anspruch 14, **dadurch gekennzeichnet, dass** der erste Spannungsflankenschritt (101B), der zweite Spannungsflankenschritt (103B), der dritte Spannungsflankenschritt (105B) und/oder der vierte Spannungsflankenschritt (107B) die Spannungsflanken durch Begrenzung der Spannungsänderung (dv/dt) steuern.
